# EUROPEAN PATENT APPLICATION

(11) **EP 4 449 850 A1**
(43) Date of publication of application: **23.10.2024**
(21) Application number: 24165603.2
(22) Date of filing: 22.03.2024
(51) Int. Cl.: A01D 41/127, A01D 43/073, G01F 22/00

(54) **PERCEPTION SYSTEM AND METHOD FOR FILL LEVEL SENSING AND DECISION SUPPORT**

(30) Priority: 21.04.2023 US 202318304944
(71) Applicant: Deere & Company, Moline, IL 61265 (US)
(72) Inventor: Davis, Travis J., Mannheim (DE)
(74) Representative: Holst, Sönke

(57) **Abstract**

An intelligent fill level system includes a material unloading container having an interior and a material entryway and a plurality of perception sensors mounted along a rim of the entryway, each sensor configured to generate perception data representative of a profile of unloaded material in at least a portion of the interior. A data processing unit, which may for example be onboard the material unloading container, determines one or more multidimensional profile characteristics, such as for example a fill level, of the unloaded material within the material unloading container at least via fusion of the perception data from the plurality of perception sensors, and a communications unit, which may also for example be onboard the container, transmits output signals representative of the determined one or more multidimensional profile characteristics to one or more remote data processing units associated with respective material loading work machines.

## Description

### FIELD OF THE DISCLOSURE

The present disclosure relates at least in part to work machines, material unloading containers, and techniques assisting in logistics and/or automation of corresponding operations such as crop harvesting. More particularly, the present disclosure relates at least in part to perception systems and methods for generating multidimensional profiles of unloaded material in a wagon, trailer, or equivalent container, and making this information available to harvesting machines, other nearby machines, or remote managers for improved logistics and efficiency.

### BACKGROUND

There are a wide variety of different types of agricultural machines. Some exemplary agricultural machines include self-propelled vehicles such as forage harvesters that harvest grain or other crop. Such harvesters often unload into carts, which may be static but generally are otherwise pulled by tractors, or semitrailers, as the harvesters are moving.

By way of example, while harvesting in a field using a forage harvester, an operator attempts to control the forage harvester to maintain harvesting efficiency, during many different types of conditions. The soil conditions, crop conditions, etc., can all change. This may result in the operator changing control settings. This means the operator needs to devote a relatively large amount of attention to controlling the forage harvester.

At the same time, a semitruck or tractor-pulled cart, is often in position relative to the forage harvester (e.g., alongside the forage harvester or behind the forage harvester) so that the forage harvester can fill the truck or cart, while moving through the field. In some current systems, this requires the operator of the forage harvester to control the position of the unloading spout and flap so that the truck or cart is filled evenly, but not over filled. Even a momentary misalignment between the spout and the truck or cart may result in hundreds of pounds of harvested material being dumped on the ground, rather than in the truck or cart.

Accordingly, techniques have been applied to automate aspects of the container detection and material unloading process, to divert at least some requirements from the operator. However, as automation and autonomy become increasingly important considerations, it is insufficient to merely automate one machine and certain features of that one machine in a system that integrates any amount of other equipment.

### BRIEF SUMMARY OF THE DISCLOSURE

The current disclosure provides an enhancement to conventional systems and methods, for example by adding perception capable sensors, perception interpretation computation, and an onboard and/or distributed communications unit to wagons, construction trucks, semi-trailers, or the like. Exemplary perception sensors could include cameras at different frequencies, Lidar, radar, ultrasonic, capacitive sensors, pressure sensors, etc. The perception interpretation computation may be able to read, and make decisions on, the sensor outputs and the communications unit may transmit those results to, e.g., a harvesting machine, other nearby machines, or offboard to remote managers.

The addition of this sensing, interpretation, and communication capability may fill a vital need in harvesting operations, in particular for autonomous operations.

There are scales that are in use today on wagons and trailers, but such devices are prone to error and can for example be heavily influenced based on the moisture of the material (e.g., grain) loaded in the container. Systems and methods as disclosed herein may provide a more direct sensing of an actual level of the material in the wagons, carts, and trucks. The addition of this sensing could also identify the material properties of the unloaded material in the container to assist with logistics. The knowledge of the material properties and multidimensional profile characteristics such as fill levels may then be wirelessly transmitted to the harvesting machine so that the operator can always be aware of the fill levels in the unloading cart, wagon, or truck.

In addition, with the use of wireless communications networks such as cellular, satellite, etc., the status of these wagons, carts, and trucks, also will help support logistics planning for the operations manager to create locations and fill levels of equipment at the construction or agricultural worksites.

According to an embodiment, a computer-implemented method is disclosed herein for multidimensional profiling of unloaded material within a material unloading container having an interior and a material entryway. Perception data representative of a profile of unloaded material in at least a portion of the interior are received from a plurality of perception sensors mounted to the material unloading container, for example along a rim of the entryway. One or more multidimensional profile characteristics of the unloaded material within the material unloading container are automatically determined at least via fusion of the perception data from the plurality of perception sensors. Output signals representative of the determined one or more multidimensional profile characteristics are transmitted to one or more remote data processing units associated with respective material loading work machines.

In one exemplary aspect according to the above-referenced embodiment, the one or more multidimensional profile characteristics may be determined by selectively retrieving from data storage a model associated with the material unloading container and applying the fused perception data within the model and further in view of a capacity of the interior.

In another exemplary aspect according to the above-referenced embodiment, the method may further include determining one or more material properties associated with the unloaded material, at least in view of the one or more multidimensional profile characteristics.

In another exemplary aspect according to the above-referenced embodiment, the method may further include receiving further sensor inputs representative of a measured weight of unloaded material within the interior, and determining the one or more material properties associated with the unloaded material further in view of the measured weight.

In another exemplary aspect according to the above-referenced embodiment, the method may further include determining a remaining capacity of the material unloading container, at least partially in view of the determined one or more material properties.

In another exemplary aspect according to the above-referenced embodiment, the method may further include determining the remaining capacity of the material unloading container further in view of one or more estimated material properties associated with material to be unloaded into the interior.

In another exemplary aspect according to the above-referenced embodiment, the method may further include coordinating respective work cycles for each of the one or more material loading work machines, with respect to at least a remaining capacity of the material unloading container.

In another exemplary aspect according to the above-referenced embodiment, the method may further include coordinating the respective work cycles with respect to at least a respective remaining capacity for each of a plurality of material unloading containers.

In another exemplary aspect according to the above-referenced embodiment, the method may further include selectively transmitting the output signals representative of the determined one or more multidimensional profile characteristics to one or more remote data processing units identified with respect to a current work area.

In another exemplary aspect according to the above-referenced embodiment, the respective work cycles may be coordinated further based on one or more of: a duration of a planned work cycle; a loading capacity of the work machine; and an estimated material property associated with material to be harvested and loaded.

In another exemplary aspect according to the above-referenced embodiment, the method may further include generating a display at each of the one or more material loading work machines, representing at least the determined one or more multidimensional profile characteristics of the unloaded material within the material unloading container.

In another exemplary aspect according to the above-referenced embodiment, the method may further include generating output signals to regulate, at each of the one or more material loading work machines, a respective loading operation of material into the interior based at least in part on the determined one or more multidimensional profile characteristics of the unloaded material within the material unloading container.

In another embodiment, a system as disclosed herein includes a material unloading container having an interior and a material entryway, and a plurality of perception sensors mounted along a rim of the entryway, each sensor configured to generate perception data representative of a profile of unloaded material in at least a portion of the interior. A data processing unit is linked to the plurality of perception sensors via a communications network and configured to determine one or more multidimensional profile characteristics of the unloaded material within the material unloading container at least via fusion of the perception data from the plurality of perception sensors. A communications unit is linked to the data processing unit and configured to transmit output signals representative of the determined one or more multidimensional profile characteristics to one or more remote data processing units associated with respective material loading work machines.

In various exemplary aspects according to the above-referenced system embodiment, the data processing unit and/or the onboard communications unit may be configured to direct the performance of operations according to the exemplary aspects described with respect to the above-referenced method embodiment.

In another exemplary aspect according to the above-referenced system embodiment, the communications unit may be configured to selectively transmit the output signals representative of the determined one or more multidimensional profile characteristics to one or more remote data processing units identified with respect to a current work area.

In another exemplary aspect according to the above-referenced system embodiment, the communications unit may be configured to broadcast first messages, and further to selectively transmit second messages comprising the output signals representative of the determined one or more multidimensional profile characteristics to one or more remote data processing units having responded to the broadcast first messages within the current work area.

Numerous objects, features and advantages of the embodiments set forth herein will be readily apparent to those skilled in the art upon reading of the following disclosure when taken in conjunction with the accompanying drawings.

### BRIEF DESCRIPTION OF THE DRAWINGS

Fig. 1 is a perspective view representing an exemplary embodiment of a material unloading container and an associated material loading work machine as disclosed herein.
Fig. 1B is an alternative perspective view representing the material unloading container and associated material loading work machine according to Fig. 1.
Fig. 2 is a block diagram representing an exemplary perception sensing, data processing, and data communications system for the material unloading container of Fig. 1.
Fig. 3 is a block diagram representing an exemplary data processing system for the material loading work machine of Fig. 1.
Fig. 4 is a flowchart representing an exemplary embodiment of a method as disclosed herein.

### DETAILED DESCRIPTION

The implementations disclosed in the above drawings and the following detailed description are not intended to be exhaustive or to limit the present disclosure to these implementations.

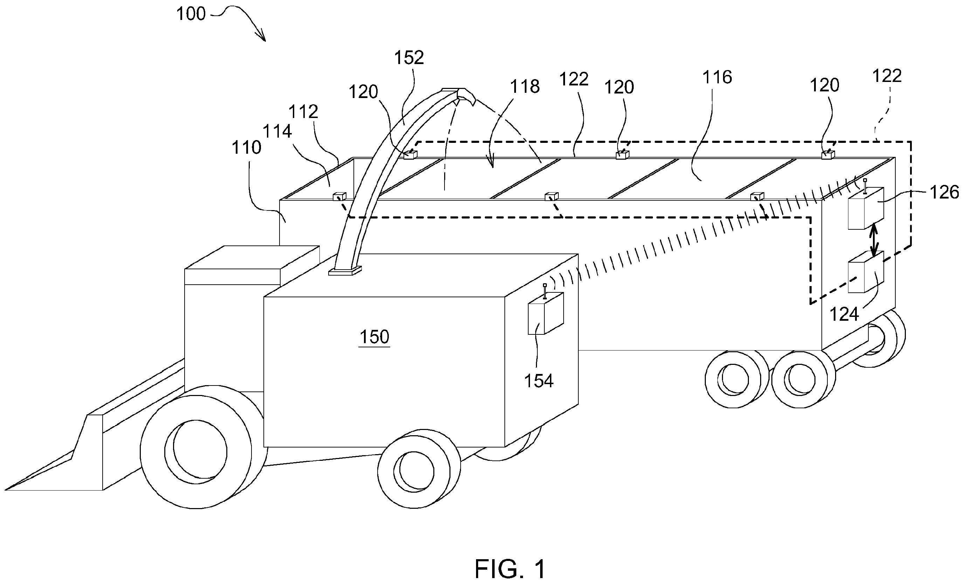

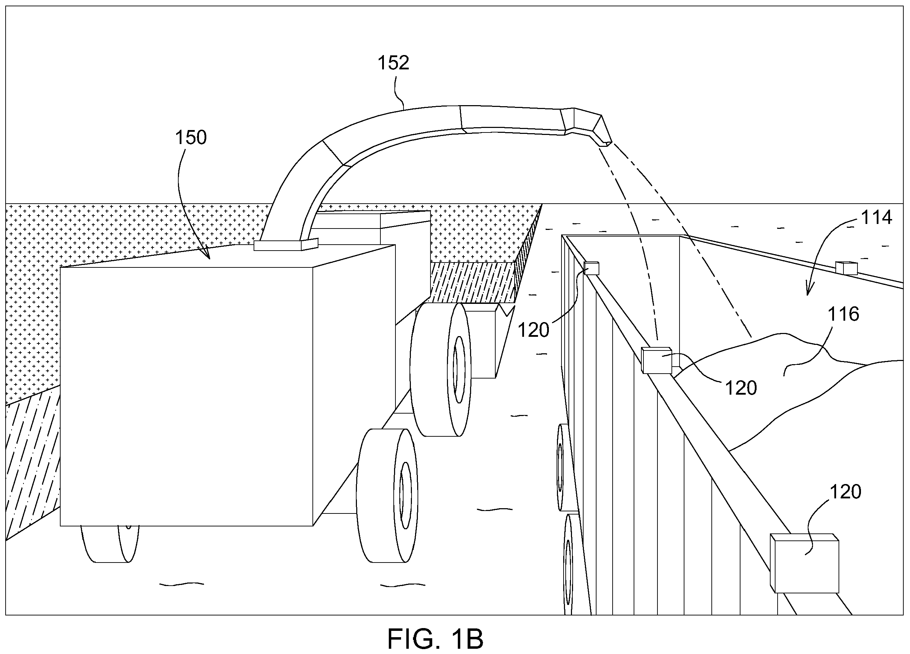

Referring initially to Fig. 1, a system 100 as disclosed herein may include one or more "smart" material unloading (i.e., material receiving) containers 110 such as for example semi-trailers disposed in a work area and configured to receive material from one or more material loading work machines 150. An exemplary work machine 150 in the context of the present disclosure may be a forage harvester, but in various embodiments may include alternative or supplemental types of work machines such as for example are implemented in agriculture, construction, forestry, road building, and the like.

As previously noted, it can be very difficult for an operator to maintain high efficiency in controlling a material loading work machine 150, and also to optimally control the material loading mechanisms to achieve an efficient fill strategy in filling a material unloading container 110. Such a fill strategy desirably results in a material unloading container 110 that is evenly full, so that there are no empty spots in the material unloading container 110, or sub-optimally filled spots, and so that the material unloading container 110 is not over filled. This often means that the operator needs to control the position of the loading device 152 (or spout in the illustrated context) relative to the material unloading container 110, and the flaps (to control material trajectory), offsets between the spout and the edges defining a material entry 112 of the material unloading container (both front and rear edges, and side edges), among other things. A fill strategy for evenly distributing loaded material 116 within an interior 114 of the material unloading container 110 may account for the contours of the material entry 112, a targeted point of contact 118 within the interior 114, a detected or calculated profile of the loaded material 116 within the interior 114, a detected or projected movement (if any) of the material unloading container 110 as it for example may be self-propelled or pulled by a semi-trailer alongside the work machine 150, and the like.

In the example shown in Figs. 1 and 1B, a loading device 152 (e.g., including a spout and a flap) of the work machine 150 may be positioned to unload the harvested material 116 to fill the unloading container 110 according to a pre-defined side-by-side fill strategy. A set of perception sensors 120 are mounted on the material unloading container 110, in a configuration as shown including perception sensors 120 mounted along the entry 112 and more particularly along a rim of the container 110 with respective fields of view including at least a portion of an interior 114 thereof. In various embodiments it may be contemplated that the perception sensors 120 have substantially overlapping fields of view such that even if one or more perception sensors 120 have an obscured view or otherwise become non-functional during operation, one or more other perception sensors 120 are capable of providing signals representative of profile characteristics for the unloaded material substantially throughout the interior.

In embodiments within the scope of the present disclosure and not illustrated herein, one or more of the perception sensors 120 may be mounted within the interior 114 of the unloading container 110 and beneath the rim of the entry 112. For example, capacitive or pressure sensors may also be used to generate signals representative of a material distribution throughout the interior 114. In embodiments within the scope of the present disclosure and not illustrated herein, one or more of the perception sensors 120 may be mounted separately from the frame and more particularly the entry to the unloading container 110, such as at an elevated position relative to the rim via for example an articulated assembly.

The harvested material 116 may be unloaded onto a point of contact 118 within the interior of the material unloading container at any given time, with the points of contact within the interior of the material unloading container (i.e., where the material lands, either on a surface of the material unloading container or on other previously unloaded material) being controllably adjusted by an operator and/or automated control system associated with the work machine 150.

Exemplary perception sensors 120 may include any one or more of imaging devices such as cameras 120a, lidar sensors 120b, radar sensors 120c, ultrasonic sensors 120d, and other sensors 120e including but not limited to laser scanners or the like. In various embodiments, each of a plurality of perception sensors 120 may have a respective field of view corresponding to a portion of the interior 114 of the material unloading container 110, and wherein each portion of the interior 114 is included within the respective field of view of at least one of the perception sensors 120.

Perception sensors 120 may be provided at one or more locations on or relative to the unloading container 110, not limited to the illustrated and exemplary locations in Figures 1 or 1B, and may for example be mounted on dedicated camera mounts. One or more of the perception sensors 120 may be fixed in position and orientation relative to the entry 112 of the material unloading container 110. In an embodiment, the camera mount for a given perception sensor 120 may be pivotable or otherwise adjustable to allow for one or more degrees of freedom of movement and corresponding adjustment to the respective field of view.

Input signals from the perception sensors 120 may be combined, for example using fusion techniques as needed for disparate types of sensors and corresponding output signals, and processed to generate multidimensional profile characteristics for the unloaded material 116 within the interior 114 of the material unloading container 110. Such profile characteristics may for example include or otherwise represent respective heights of unloaded material 116 at each of a number of locations within the interior 114 of the material unloading container 110.

Signals from each of the perception sensors 120 may be communicatively coupled via bus lines 122 to an onboard data processor 124 or controller 124. The output signals from the perception sensors may, for example, be provided directly to the onboard data processor 124 or via intervening components for analog-to-digital conversion or the like. The output signals may be provided to the onboard data processor 124 in substantially unmodified form, or in an embodiment the perception sensors 124 may be configured to perform certain functions such as for example image processing on captured images such that output data to the data processor 124 is transformed to comply with specified input/ data transmission requirements or otherwise simplify downstream data processing, better enable sensor substitution, etc. The disclosure herein may typically refer to an "onboard" data processor 124 as illustrated in the accompanying figures, but distributed or other data processor configurations separate from the container are contemplated within the scope of the present disclosure. For example, data processing functions associated with data processor 124 may at least partially be performed in a cloud computing arrangement, or via one or more data processors onboard a work vehicle pulling the container, etc.

The onboard data processor 124 may be configured to process the data from the perception sensors 120 and transmit the processed signals and/or further generated outputs to a communications unit 126 which is further wirelessly linked, for example via communications network 140, to a communications unit 154 associated with the work machine 150. While the bus lines 122 are illustrated in Fig. 1 as being physically wired between the perception sensors 120 and the data processor 124, in other embodiments the corresponding local communications may be wireless. Communications between the data processor 124 and the communications unit 126 of the unloading container 110 may likewise be wired or wireless in any of various forms known to those of skill in the art. Wireless data transmission and communication may take place, for example, via the Internet, WLAN, Bluetooth, or equivalent transmission media and devices. Data transmitted from the onboard data processor 124 to any external devices may in various embodiments be encrypted or unencrypted as the circumstances may require.

Generally stated, various operations, steps or algorithms as described in connection with data processors, controllers, servers, and/or remote computing devices can be embodied directly in hardware, in a computer program product such as one or more software modules executed by one or more respective processors, or in a combination thereof. The computer program product can reside in one or more of data storage devices such as RAM memory, flash memory, ROM memory, EPROM memory, EEPROM memory, registers, hard disk, a removable disk, or any other form of computer-readable medium known in the art. An exemplary computer-readable medium can be coupled to a respective processor such that the processor can read information from, and write information to, the memory/ storage medium. In the alternative, the medium can be integral to the processor. The processor and the medium can reside in an application specific integrated circuit (ASIC). The ASIC can reside in a user terminal. In the alternative, the processor and the medium can reside as discrete components in a user terminal.

The term "processor" as used herein at least with respect to data processors 124, 156 may refer to at least general-purpose or specific-purpose processing devices and/or logic as may be understood by one of skill in the art, including but not limited to a microprocessor, a microcontroller, a state machine, and the like. A processor can also be implemented as a combination of computing devices, e.g., a combination of a DSP and a microprocessor, a plurality of microprocessors, one or more microprocessors in conjunction with a DSP core, or any other such configuration.

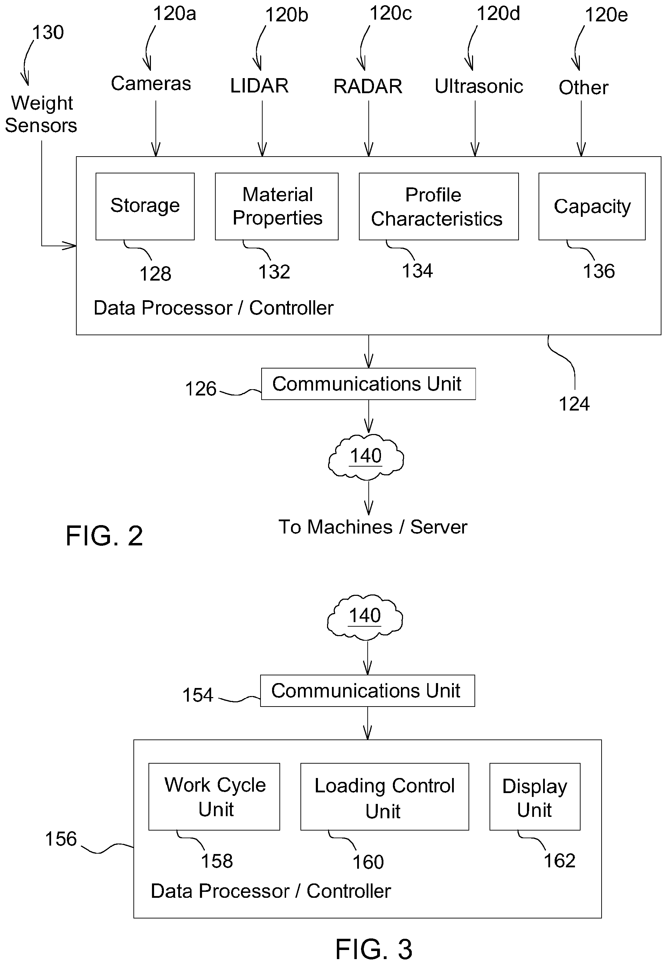

Referring next to Fig. 2, the onboard data processor 124 or controller 124 for this purpose may be a control unit associated with the unloading container 110 or even external to the unloading container 110 such as for example in association with a tractor pulling the container. The data processor 124 may be configured to analyze the output signals from the perception sensors 120, alone or in combination with other inputs such as may for example be received from one or more weight sensors 130 associated with the unloading container 110, and store data representing the output signals, derivative of the output signals, calculated based at least in part on the output signals, or the like in data storage 128.

The data processor 124 may determine or otherwise ascertain data relating to the material properties 132 of material 116 loaded within the interior 114 of the unloading container 110 and within the field of view of the various perception sensors 120, which data relating to the material properties 132 may be determined in part based on sensed weight values from the weight sensors 130. Data relating to material properties 132 within the scope of the present disclosure may directly describe material properties of unloaded material, or may be data which enables conclusions to be drawn about the material unloaded into the container 110. Data relating to material properties 132 may in some embodiments include the locations of material harvested and unloaded into the container 110 and determined for example using GPS coordinates, environmental conditions prior to or during the harvesting operation, and the like.

The data processor 124 may determine or otherwise ascertain profile characteristics 134, for example multidimensional profile characteristics, of material 116 within the interior 114 of the unloading container 110 and within the field of view of the various perception sensors 120. Exemplary profile characteristics are further described below, but may generally relate to a detected profile corresponding to the surface of material unloaded into the unloading container, wherein an exemplary profile characteristic may include a fill level and/or material volume of the unloading container or a fill level and/or material volume of the unloading container may be derived therefrom.

The data processor 124 may determine or otherwise ascertain a remaining capacity 136 for the interior 114 of the unloading container 110, which remaining capacity 136 may be determined from known information regarding the unfilled capacity of the unloading container 110 and also in part based on the material properties 132 and/or the profile characteristics 134. The remaining capacity 136 may be determined further in part based on inputs representing material properties of material yet to be unloaded into the container.

Any one or more of the material properties 132, profile characteristics 134, and remaining capacity 136 may for example be determined or otherwise ascertained using relevant models that may be stored and selectively retrieved for implementation by the data processor 124. Models may be generated and iteratively corrected over time with continuing receipt and processing of input data sets, and selected for implementation based for example on current input data sets for a material property, a filling strategy, a type of unloading container, a type of work machine, a rate of material loading from the work machine, and any of other various factors as would be available and relevant from the perspective of one of skill in the art.

Data processor 124 may be embodied by or include a general purpose processor, a digital signal processor (DSP), an application specific integrated circuit (ASIC), a field programmable gate array (FPGA) or other programmable logic device, discrete gate or transistor logic, discrete hardware components, or any combination thereof designed and programmed to perform or cause the performance of the functions described herein. A general-purpose processor can be a microprocessor, but in the alternative, the processor can be a microcontroller, or state machine, combinations of the same, or the like. A processor can also be implemented as a combination of computing devices, e.g., a combination of a DSP and a microprocessor, a plurality of microprocessors, one or more microprocessors in conjunction with a DSP core, or any other such configuration.

With further illustrative reference to Fig. 3, the work machine 150 as illustrated in Figs. 1 and 1B may include a communications unit 154 as previously noted for receiving the signals and/or output data corresponding to the material properties 132, profile characteristics 134, remaining capacity 136, and/or the like from the unloading container 110. A data processor 156 or controller 156 associated with the work machine 150 may further process the received signals and/or output data in the context of various relevant program modules including for example a work cycle unit 158 and a loading control unit 160.

Graphical images representing, or otherwise based on processing of, the received signals and/or output data may be generated on a display unit 162, for example an onboard display unit mounted within an operator cab of the work machine 150 or on a mobile computing device associated with an operator of the work machine 150, and may visually represent profile characteristics 134 (via, e.g., a three-dimensional representation of the profile, color coding or an equivalent with respect to representative portions of the interior, etc.), material properties (via, e.g., textual output, color coding or an equivalent with respect to representative portions of the interior, etc.), remaining capacity (via, e.g., a displayed percentage, color coding, etc.), and the like.

In an embodiment, output signals may be transmitted from the communications unit 126 of the unloading container 110 to a communications unit 154 of a work machine 150 that is identified based on proximity as being the work machine 150 that is or will be unloading material 116 into the container 110.

In an embodiment, output signals may be broadcast from the communications unit 126 of the unloading container 110 and received by communications units 154 for any one or more work machines 150 within range of the unloading container 110.

In an embodiment, first signals may be broadcast generally or otherwise transmitted directly from the communications unit 126 of the unloading container 110, wherein one or more data processors 156 of work machines 150 within range to receive the first signals may respond to the data processor 124 of the unloading container 110 with a request for transmittal of second signals or messages comprising the output signals and/or output data as referenced above.

In an embodiment, a plurality of unloading containers 110 may be disposed within a work area further comprising one or more work machines 150, wherein output signals generated from each of the plurality of unloading containers 110 may be received by the one or more work machines 150, continuously or when within range to receive the output signals.

In an embodiment, output signals from each unloading container 110 may be transmitted via the respective communications unit 126 and the communications network 140 to a server (not shown), which further forwards the output signals (or generates a corresponding message) to a selected or otherwise identified communications unit 156 for a respective work machine 150. The remote server may for example be provided in the context of a cloud server platform, further communicatively linked to one or more remote computing devices (not shown) such as for example to receive and convey additional user input to the system or to display information collected and/or derived using the systems and methods as disclosed herein.

The server in this context may for example be configured to determine a work plan for the work area and to coordinate activity by the one or more work machines 100 during a work cycle and further with respect to the one or more unloading containers 110 based at least in part on the respectively determined material properties, profile characteristics, remaining capacity, or the like. In an embodiment, such work planning and/or work cycle planning may otherwise or in addition be performed at one or more data processors associated with the work machines themselves.

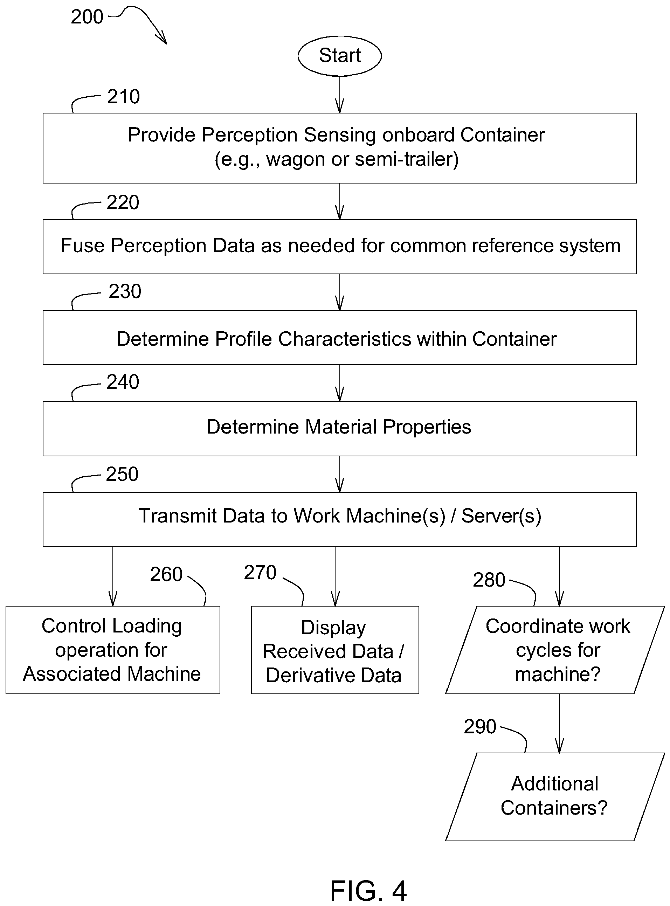

Referring next to Fig. 4, an exemplary and non-limiting embodiment of a method 200 may be described for multidimensional profiling of unloaded material within a material unloading container, such as for example a container 110 as previously discussed with respect to Figs. 1- 3.

The illustrated method 200 begins by providing (step 210) perception sensing capability onboard the material unloading container, which may for example be a wagon, cart, semi-trailer, or the like. The perception sensing capability may be implemented using any perception sensors as noted above. A plurality of such perception sensors may for example be arrayed along a circumference of an entry for the container. A single perception sensor may for example be provided with a field of view sufficiently encompassing an interior of the container. The perception sensors may each be mounted at sufficiently high elevation to at least observe a surface of the unloaded material (e.g., harvested material) as the unloading container fills.

In an embodiment one or more perception sensors are mounted to observe and monitor a surface and/or profile of the unloaded material above a first elevation with respect to a base of the unloading container, whereas one or more perception sensors are mounted to observe and monitor a surface and/or profile of the unloaded material below the first elevation with respect to the base of the unloading container, and collectively the plurality of perception sensors encompass a substantially complete range of multidimensional profile characteristics of unloaded material within the unloading container and not exceeding a maximum height of the interior of the unloading container.

In step 220, assuming for example that a plurality of perception sensors are provided, and further particularly in the event that different types of perception sensors are utilized or having sufficiently different perspectives/ fields of view, the method 200 may further include sensor data fusion algorithms and image processing techniques for characterizing, classifying, or otherwise processing and storing the perception data as needed for combining the respective sensor outputs in a common reference system.

If first and second cameras, for example, are provided as perception sensors and properly calibrated to respective current positions and orientations with respect to the loading container, fusion techniques may be implemented to identify a location of material within the interior and with respect to a global coordinate frame, and a height of the material within the interior. Where the fields of view for the respective cameras may overlap, fusion techniques may further be implemented to generate a cumulative image, confirm camera to vehicle calibration for each of the cameras, and the like.

In step 230, the method 200 further includes determining profile characteristics of the material unloaded within the container. In an embodiment, the determined profile characteristics may be multidimensional profile characteristics, for example defining or otherwise relating to a magnitude of a height (e.g., a z-coordinate) with respect to each of a plurality of locations (e.g., in x- and y-coordinates) within the material unloading container. Multidimensional profile characteristics may be characterized, in addition or in the alternative of height or elevation values with respect to a specified location, in the context of a longitudinal slope, a cross-slope, or other parameters for characterizing a relative imbalance of unloaded material within the container, and as may be utilized by a material loading algorithm for adjusting a location of further material loading by an associated work machine.

Profile characteristics may be determined based on image classification or equivalent processing techniques to identify physical features of the unloaded material based on captured images or equivalent information from the perception sensors. Image data related to a fill level as a representative profile characteristic of the unloading container may for example be integrated using a model based filter to produce an accurate estimate of the fill level.

The profile characteristics may further be determined accounting for reference data corresponding to known parameters of the entry and/or interior of the unloading container, wherein a current profile for example defines an amount of unloaded material relative to the underlying base and side surfaces of the container. Exemplary reference data for an unloading container may include the container perimeter, the container edges, reference dimensions, reference shape, drawings, models, layout, and configuration, as may be retrievably stored in data storage (e.g., non-volatile electronic memory) functionally linked to the data processor.

In step 240, which is represented as taking place after step 230 but may alternatively be performed before step 230 or even omitted altogether in various embodiments, the method 200 further includes determining material properties of the material unloaded into the container. Material properties in an embodiment may relate to a type of material having been unloaded, a condition (e.g., moisture) of the unloaded material, a density of the unloaded material, and/or the like. Material properties may for example be determined by user input via a user interface, image classification relating to captured images of the unloaded material, a sensed weight of the unloaded material relative to a determined multidimensional profile, and/or the like.

In step 250, the method 200 further includes transmitting output data, for example output data representing the profile characteristics, material properties, remaining capacity, and/or derivations therefrom, from a local (i.e., onboard with respect to the material unloading container) data processing and communications unit to one or more remote data processing units (i.e., associated with work machines and/or servers external to the material unloading container).

The output data, having been transmitted to at least one work machine, may be implemented locally in step 260 to control a loading operation for the respective work machine. In embodiments involving such an automated unloading capability, the loading control unit of a work machine may for example include or otherwise be functionally linked to various components of the work machine therefor, including but not limited to a steering system, steering controller, braking system, braking controller, propulsion system, propulsion controller, vehicle controller, auger, and the like to provide automated control of the material loading process in a manner otherwise generally known in the art. In an embodiment, the work machine loading control unit may control a loading rate, slewing angle or the like with respect to the spout and associated components.

The transmitted output data may in addition, or in the alternative with respect to step 260, may be implemented in step 270 to display information on an onboard display unit or a display unit of a mobile computing device. The information may be associated with the output data or derivative data with respect to the output data, and may for example relate to the profile characteristics, material properties, remaining capacity, and/or derivations therefrom as being relevant to a current material unloading operation.

In an embodiment, one or more multidimensional profile characteristics may be dynamically represented as overlays against a static template corresponding to the unloading container contours and/or configuration itself. For example, a visual aid may include displaying the profile of the unloaded material in the container, or fill status, as a virtual representation of translucent vertical bars over a near wall of the unloading container, wherein each bar corresponds to one of a series of cells within a storage volume of the unloading container. In an embodiment, the bars can be drawn using a technique known as alpha-blending, but alternative visual overlay techniques are contemplated as well. The height of the vertical bars may for example be proportional to the height of the unloaded material in the corresponding cell, wherein a color of each bar may be representative of the cell fill level. In such an embodiment, when the height of material in a particular cell reaches a desired fill height or maximum fill height, the color of the vertical bar corresponding to that cell may be shown as green. Cells that are not completely full may for example have predetermined colors to represent a proportional gradient between minimal and the maximum fill height.

The transmitted output data may in addition, or in the alternative with respect to steps 260 and/or 270, may be implemented in step 280 to coordinate work site planning for one or more work machines, work cycle planning for a particular work machine, and the like. In an embodiment, respective work cycles may be coordinated based on a number of parameters as would be considered relevant under the circumstances to one of skill in the art, including for example a duration of a planned work cycle, a loading capacity of the container, an estimated material property associated with material to be harvested and loaded, and/or the like.

In particular where work site planning and/or work cycle planning is involved, the method 200 may optionally consider output data from a plurality of unloading containers, relating for example to the respective profile characteristics, material properties, remaining capacity, and/or derivations therefrom. A planning unit may further account for boundary conditions and/or surroundings of the work area itself, a maximum work time, a current state of the site being worked (e.g., a crop growth stage or amount of unharvested crop remaining in the work area), a geometry of terrain and/or obstacles within the work area, and other relevant travel parameters for the one or more work machines and unloading containers as possible logistics factors, along with material properties, fill levels for the unloading container and a correspondingly estimated time to fill the unloading container, etc.

Those having ordinary skill in the art will recognize that terms such as "above," "below," "upward," "downward," "top," "bottom," etc., are used descriptively for the figures, and do not represent limitations on the scope of the present disclosure, as defined by the appended claims. Furthermore, the teachings may be described herein in terms of one or more functional components, logical components, and various processing steps, which may be comprised of one or more hardware, software, and firmware components configured to perform the specified functions.

Terms of degree, such as "generally," "substantially," or "approximately" are understood by those having ordinary skill in the art to refer to reasonable ranges outside of a given value or orientation, for example, general tolerances or positional relationships associated with manufacturing, assembly, and use of the described implementations.

As used herein, "e.g." is utilized to non-exhaustively list examples and carries the same meaning as alternative illustrative phrases such as "including," "including, but not limited to," and "including without limitation." Unless otherwise limited or modified, lists with elements that are separated by conjunctive terms (e.g., "and") and that are also preceded by the phrase "one or more of' or "at least one of' indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

While the above describes example implementations of the present disclosure, these descriptions should not be viewed in a restrictive or limiting sense. Rather, there are several variations and modifications which may be made without departing from the scope of the appended claims.

## Claims

1. A system (100) comprising:
a material unloading container (110) having an interior (114) and a material entryway (112);
a plurality of perception sensors (120) mounted to the material unloading container, each sensor configured to generate perception data representative of a profile of unloaded material (116) in at least a portion of the interior;
a data processing unit (124) linked to the plurality of perception sensors via a communications network (122) and configured to determine one or more multidimensional profile characteristics (134) of the unloaded material within the material unloading container at least via fusion of the perception data from the plurality of perception sensors; and
a communications unit (126) linked to the data processing unit and configured to transmit output signals representative of the determined one or more multidimensional profile characteristics to one or more remote data processing units (156) associated with respective material loading work machines (150).

2. The system according to claim 1, wherein the one or more multidimensional profile characteristics are determined by selectively retrieving from data storage a model associated with the material unloading container and applying the fused perception data within the model and further in view of a capacity of the interior.

3. The system according to claim 1 or claim 2, wherein the data processing unit is further configured to determine one or more material properties associated with the unloaded material, at least in view of the one or more multidimensional profile characteristics.

4. The system according to claim 3, wherein the data processing unit is configured to receive further sensor inputs representative of a measured weight of unloaded material within the interior, and to determine the one or more material properties associated with the unloaded material further in view of the measured weight.

5. The system according to claim 3, wherein the data processing unit is configured to determine a remaining capacity of the material unloading container, at least partially in view of the determined one or more material properties and of one or more estimated material properties associated with material to be unloaded into the interior.

6. The system according to claim 1, further comprising the one or more remote data processing units associated with respective material loading work machines, wherein the one or more remote data processing units are configured to generate a display representing at least the determined one or more multidimensional profile characteristics of the unloaded material within the material unloading container.

7. The system according to claim 1, further comprising the one or more remote data processing units associated with respective material loading work machines, wherein the one or more remote data processing units are configured to generate output signals for regulating a loading operation of material into the interior based at least in part on the determined one or more multidimensional profile characteristics of the unloaded material within the material unloading container.

8. The system according to claim 1, further comprising the one or more remote data processing units associated with respective material loading work machines, wherein the one or more remote data processing units are configured to coordinate respective work cycles with respect to at least a remaining capacity of the material unloading container.

9. The system according to one of claims 6 to 8, further comprising a plurality of the material unloading containers, wherein the one or more remote data processing units are configured to coordinate respective work cycles with respect to at least a respective remaining capacity for each material unloading container.

10. The system according to one of claims 6 to 8, wherein the respective work cycles are coordinated further based on one or more of: a duration of a planned work cycle; a loading capacity of the work machine; and an estimated material property associated with material to be harvested and loaded.

11. The system according to claim 1 or claim 2, wherein the communications unit is configured to selectively transmit the output signals representative of the determined one or more multidimensional profile characteristics to one or more remote data processing units identified with respect to a current work area.

12. The system according to claim 11, wherein the communications unit is configured to broadcast first messages, and further to selectively transmit second messages comprising the output signals representative of the determined one or more multidimensional profile characteristics to one or more remote data processing units having responded to the broadcast first messages within the current work area.

13. A computer-implemented method (200) for multidimensional profiling of unloaded material within a material unloading container having an interior and a material entryway, the method comprising:
receiving (210), from a plurality of perception sensors mounted to the material unloading container, perception data representative of a profile of unloaded material in at least a portion of the interior;
automatically determining (230) one or more multidimensional profile characteristics of the unloaded material within the material unloading container at least via fusion (220) of the perception data from the plurality of perception sensors; and
transmitting output signals (250) representative of the determined one or more multidimensional profile characteristics to one or more remote data processing units associated with respective material loading work machines.

14. The method according to claim 13, further comprising coordinating (280) respective work cycles for each of the one or more material loading work machines, with respect to at least a remaining capacity of the material unloading container for each of a plurality of material unloading containers (290).

15. The method according to claim 13, further comprising generating output signals (260) to regulate, at each of the one or more material loading work machines, a respective loading operation of material into the interior based at least in part on the determined one or more multidimensional profile characteristics of the unloaded material within the material unloading container.
